(19) Europäisches Patentamt

European Patent Office

Office européen des brevets

(11) **EP 1 431 975 A2**

(12) **EUROPEAN PATENT APPLICATION**

(43) Date of publication:
**23.06.2004 Bulletin 2004/26**

(51) Int Cl.⁷: **G11B 20/10**, G11B 27/10

(21) Application number: **03029339.3**

(22) Date of filing: **19.12.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **20.12.2002 JP 2002370327**

(71) Applicant: **MATSUSHITA ELECTRIC INDUSTRIAL CO., LTD.**
**Kadoma-shi, Osaka 571-8501 (JP)**

(72) Inventors:
• **Nakajima, Takeshi**
**Nara-shi Nara 631-0011 (JP)**

• **Miyashita, Harumitsu**
**Nara-shi Nara 631-0013 (JP)**
• **Kimura, Naohiro**
**Uji-shi Kyoto 611-0021 (JP)**
• **Takahashi, Toshihiko**
**Kawachinagano-shi Osaka 586-0044 (JP)**
• **Ishii, Takafumi**
**Takatsuki-shi Osaka 569-0081 (JP)**

(74) Representative: **Balsters, Robert et al**
**Novagraaf International S.A.**
**25, avenue du Pailly**
**1220 Les Avanchets - Geneva (CH)**

(54) **Address reproduction circuit, optical disc drive and address reproduction method**

(57) An address reproduction circuit for reproducing address information based on a reproduction signal which is read from an optical disc including a guide groove having a wobbling shape which represents modulated address information. The address reproduction circuit includes an A/D conversion section for converting an analog wobble signal included in the reproduction signal into a digital wobble signal; and a maximum likelihood decoding section for generating an address signal representing address information having maximum likelihood from the digital wobble signal based on a state transition rule defined by a modulation rule of the modulated address information.

FIG.16

**Description**

BACKGROUND OF THE INVENTION

1. FIELD OF THE INVENTION:

The present invention relates to an address reproduction circuit and method for reproducing address information from an optical disc including a guide groove having a wobbling shape which represents modulated address information, and an optical disc drive including the address reproduction circuit.

2. DESCRIPTION OF THE RELATED ART:

For realizing efficient access to user data recorded on a recording medium, address information is usually recorded on the recording medium. On a recording medium such as, for example, a DVD-Video disc or a DVD-ROM disc, physical pits are formed and address information is located in a dispersed manner on a surface of the recording medium. Thus, a position of specific data on the recording medium can be specified. A recording medium, to which a user can record data, such as a DVD-RAM disc or the like, has a prescribed size of sector structure. Address information is defined for each sector, and the address information is formed as a physical pit at a start portion of each sector. By reading the address information based on the pit, efficient data write to and data read from a prescribed sector can be realized. In the case where the recording medium has such a sector structure, the amount of data which is recorded in a circumferential direction is increased because address information is added to a specific length of data. When address information is added to each of short sectors having about 512 bytes, the efficiency of formatting is undesirably low.

A recording medium, to which a user can record data, has a guide groove for servo tracking. Address information can be provided by forming a wobbling guide groove. (Hereinafter, a reproduction signal obtained from a wobbling guide groove will be referred to as a "wobble signal".) Address information can be added to the guide groove by, while the guide groove is formed such that the guide groove wobbles at a certain cycle, modulating the wobbling pattern. By adding the address information to the guide groove, the efficiency of formatting can be raised. The modulation is realized by frequency modulation or phase modulation.

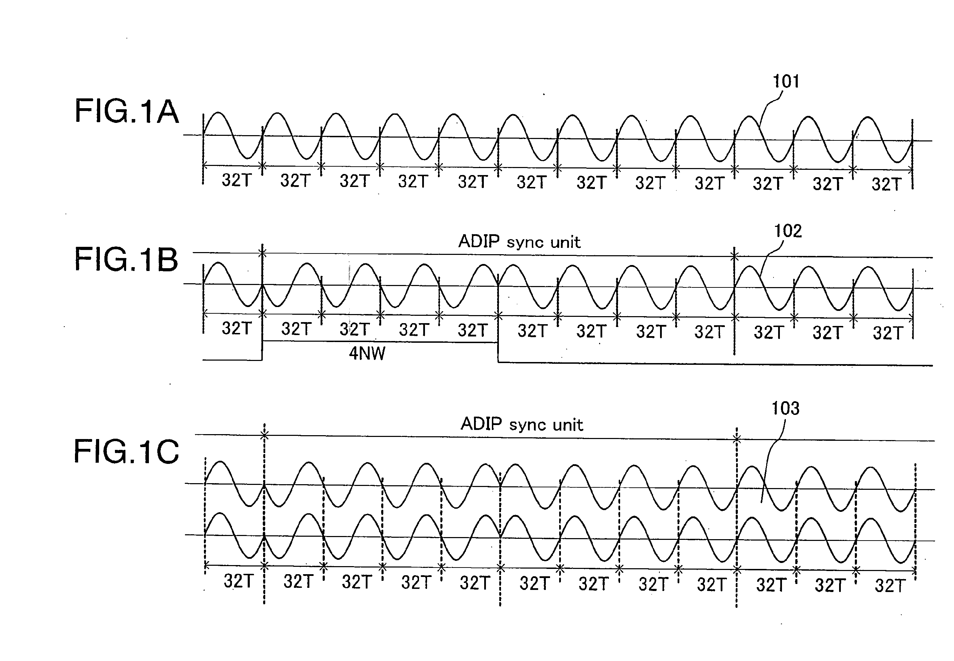

As shown in, for example, Figure **1C,** a guide groove 103 having a wobbling shape representing address information which has been phase-modulated is formed (see, for example, Japanese Laid-Open Publication No. 10-69646, Figure 1). Figure **1A** shows a wobble signal **101** obtained when a guide groove is wobbled at a monotone frequency. Where the recording clock cycle is T, the guide groove is wobbled at a cycle of 32T. When the wobbling pattern is phase-modulated, a wobble signal **102** as shown in Figure **1B** is obtained. The wobble signal **102** is obtained when a sync pattern is formed, and the phase is inverted. By detecting the position at which the phase is inverted, address information is reproduced.

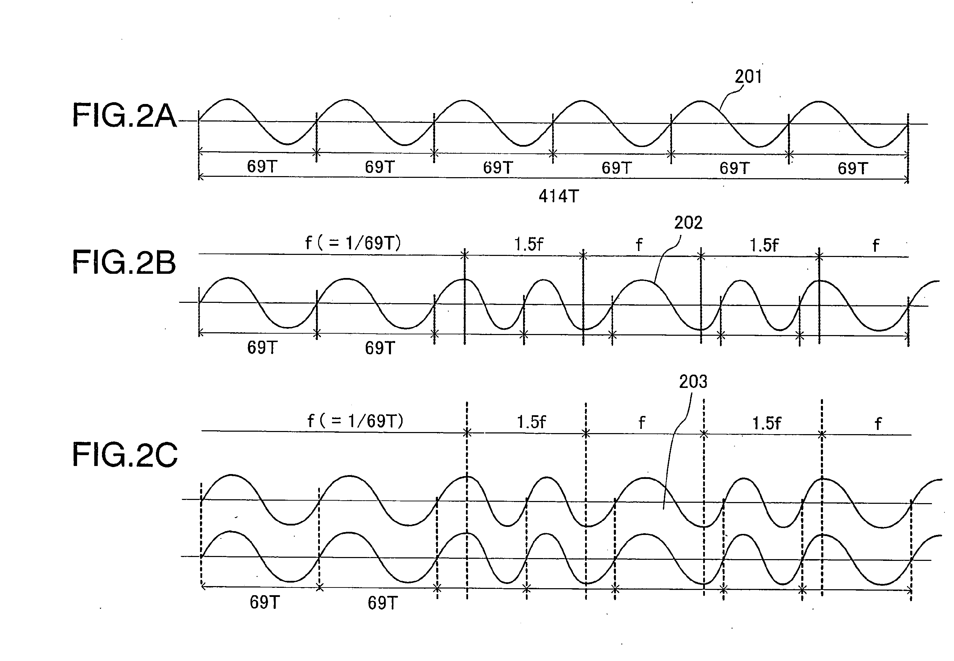

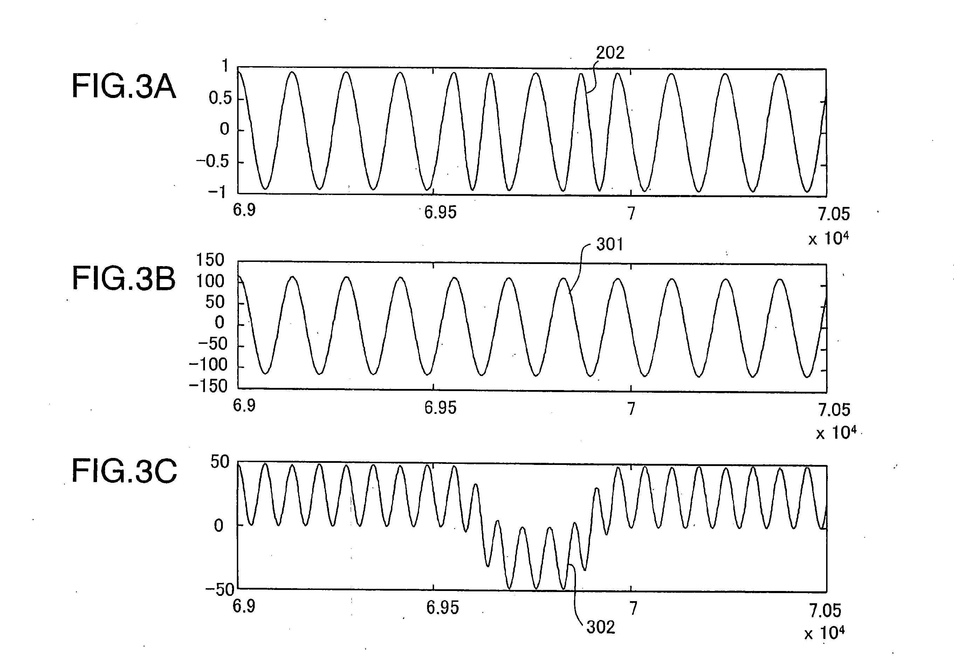

Figure **2C** shows a guide groove **203** having a wobbling shape representing address information which has been MSK (Minimum Shift Keying)-modulated (see, for example, Jung-Bae Park, et al., "A New Address Decoder using Digital MSK Demodulation Technique for the HD-DVD System", Technical Digest of ISOM/ODS2002, 2002, pp. 114-116). Figure **2A** shows a wobble signal **201** obtained when the guide groove is wobbled at a monotone frequency. By performing MSK modulation on the address information, a wobble signal **202** (Figure **2B**) is obtained. The wobble signal **202** includes a frequency component which is 1.5 times the frequency of the wobble signal 201. By detecting the position at which the MSK modulation is performed, address information is reproduced. Specifically, the wobble signal **202** shown in Figure **3A** is multiplied by a carrier signal **301** of the wobble signal **202** (the carrier signal **301** has a wobble frequency) shown in Figure **3B.** As a result, an MSK modulation component **302** as shown in Figure 3C can be detected as a multiplication output. The multiplication results are integrated per prescribed zone, and the position at which the data has beenMSK-modulated can be detected based on the code of the integration result.

Recently, as a system for reproducing digital information recorded at a high density, PRML (Partial Response Maximum Likelihood) signal processing is used for a hard disc drive, an optical disc drive and the like. An RF signal obtained from an optical disc having data recorded at a high density is waveform-shaped such that the RF signal has a PR equalizing characteristic which permits prescribed inter-code interference. Using the regularity of the inter-code interference, data having the maximum likelihood can be reproduced. The effectiveness of such PRML signal processing has been shown in the field of magnetic recording prior to the field of optical disc (see, for example, Roger W. Wood, et al., "Viterbi Detection of Class IV Partial Response on a Magnetic Recording Channel", IEEE Trans. on Comm. Vol. , COM-34, No. 5, pp. 454-461(1986)). Forexample, Japanese Patent No. 3033238 (Figure 1) proposes an adaptive maximum likelihood decoding apparatus for reducing influence of a waveform distortion included in a reproduction signal in addition to deterioration in signal quality caused by noise.

When a guide groove is irradiated with laser light for data recording, the radiation pattern of the laser light influences a wobble signal as noise. From a recording medium in which modulated address information is added to a guide groove, an address needs to be read accurately even while data is being recorded. While data is not being recorded, a wobble signal obtained from an MSK-modulated wobble pattern is strongly influenced by the wobble pattern formed in an adjacent track. The amplitude of the waveform of the reproduction wobble signal greatly fluctuates in accordance with the phase relationship of the wobble patterns in two adjacent tracks. Especially when these wobble patterns are opposite in phase, the signal amplitude is extremely reduced. The distortion in the waveform caused by the angle between the surface of the optical disc and the optical axis reduces the quality of the wobble signal, which deteriorates the reliability of the optical disc drive.

In order to detect a wobble signal obtained from an MSK-modulated wobble pattern so as to reproduce address information as shown in Figures 3A through 3D, a monotone signal generation circuit and a multiplication circuit are required. When such circuits are realized by digital circuits, it becomes necessary to sample the wobble signal at a higher frequency than the wobbling frequency. A ROM table or a logic circuit for generating a monotone signal is also required. In addition, a multiplication circuit operating at a high speed is required, which increases the circuit scale.

SUMMARY OF THE INVENTION

According to one aspect of the invention, an address reproduction circuit for reproducing address information based on a reproduction signal which is read from an optical disc including a guide groove having a wobbling shape which represents modulated address information is provided. The address reproduction circuit includes an A/D conversion section for converting an analog wobble signal included in the reproduction signal into a digital wobble signal; and a maximum likelihood decoding section for generating an address signal representing address information having maximum likelihood from the digital wobble signal based on a state transition rule defined by a modulation rule of the modulated address information.

In one embodiment of the invention, the modulated address information is MSK-modulated, and the state transition rule is defined by an MSK modulation rule.

In one embodiment of the invention, the state transition rule has four states, state S0, state S1, state S2 and state S3 defined by the MSK modulation rule. According to the state transition rule, when the address information represents 0 in state S0, the state of reproduction makes a transition from state S0 to state S0, and a digital wobble signal representing +1 is estimated. When the address information represents 1 in state S0, the state of reproduction makes a transition from state S0 to state S1, and a digital wobble signal representing +1 is estimated. When the address information represents 0 in state S1, the state of reproduction makes a transition from state S1 to state S2, and a digital wobble signal representing -1 is estimated. When the address information represents 0 in state S2, the state of reproduction makes a transition from state S2 to state S3, and a digital wobble signal representing -1 is estimated. When the address information represents 0 in state S3, the state of reproduction makes a transition from state S3 to state S0, and a digital wobble signal representing +1 is estimated.

In one embodiment of the invention, the state transition rule has four states, state S0, state S1, state S2 and state S3 defined by the MSK modulation rule. According to the state transition rule, when the address information represents 0 in state S0, the state of reproduction makes a transition from state S0 to state S0, and a digital wobble signal representing -1 is estimated. When the address information represents 1 in state S0, the state of reproduction makes a transition from state S0 to state S1, and a digital wobble signal representing 0 is estimated. When the address information represents 0 in state S1, the state of reproduction makes a transition from state S1 to state S2, and a digital wobble signal representing +1 is estimated. When the address information represents 0 in state S2, the state of reproduction makes a transition from state S2 to state S3, and a digital wobble signal representing 0 is estimated. When the address information represents 0 in state S3, the state of reproduction makes a transition from state S3 to state S0, and a digital wobble signal representing -1 is estimated.

In one embodiment of the invention, the modulated address information is phase-modulated, and the state transition rule is defined by a phase modulation rule.

In one embodiment of the invention, the state transition rule has five states, state S0, state S1, state S2, state S3 and state S4 defined by the phase modulation rule. According to the state transition rule, when the address information represents 0 in state S0, the state of reproduction makes a transition from state S0 to state S0, and a digital wobble signal representing +1 is estimated. When the address information represents 1 in state S0, the state of reproduction makes a transition from state S0 to state S1, and a digital wobble signal representing -1 is estimated. When the address information represents 0 in state S1, the state of reproduction makes a transition from state S1 to state S0, and a digital wobble signal representing +1 is estimated. When the address information represents 1 in state S1, the state of reproduction makes a transition from state S1 to state S2, and a digital wobble signal representing -1 is estimated. When the address information represents 0 in state S2, the state of reproduction makes a transition from state S2 to state S0, and a digital wobble signal representing +1 is estimated. When the address information represents 1 in state S2, the state of reproduction makes a transition from state S2 to state S3, and a digital wobble signal representing -1 is estimated. When the address information represents 1 in state S3, the state of reproduction makes a transition from state S3 to state S4, and a digital wobble signal representing -1 is estimated. When the address information represents 0 in state S4, the state of reproduction makes a transition from state S4 to state S0, and a digital wobble signal representing +1 is estimated.

In one embodiment of the invention, the maximum likelihood decoding section includes a branch metric calculation section for calculating a distance between the digital wobble signal and an expected value of the maximum likelihood decoding section, an addition/selection/comparison section for accumulating calculation results of the branch metric calculation section based on the state transition rule, and a survival path determination section for generating an address signal representing address information having maximum likelihood based on the accumulation result of the addition/selection/comparison section and the state transition rule.

In one embodiment of the invention, the maximum likelihood decoding section includes a branch metric calculation section for calculating a distance between the digital wobble signal and an expected value of the maximum likelihood decoding section, an addition/selection/comparison section for accumulating calculation results of the branch metric calculation section based on the state transition rule, a survival path determination section for generating an address signal representing address information having maximum likelihood based on the accumulation result of the addition/selection/comparison section and the state transition rule, and an expected value control section for controlling the expected value based on the generated address signal and the digital wobble signal.

In one embodiment of the invention, the address reproduction circuit further includes a demodulation section for demodulating the generated address signal. The demodulation section outputs an address read status signal representing an address read status, and the expected value control section determines whether or not the expected value is to be returned to an initial value based on the address read status signal.

In one embodiment of the invention, the address reproduction circuit further includes a PLL for synchronizing the analog wobble signal and a timing signal to be input to the A/D conversion section with each other. The PLL outputs a synchronization status signal representing a synchronization status of the analog wobble signal and the timing signal, and the expected value control section determines whether or not the expected value is to be returned to an initial value based on the synchronization status signal.

According to another aspect of the invention, an optical disc drive for reproducing address information from an optical disc including a guide groove having a wobbling shape which represents modulated address information is provided. The optical disc drive includes a read section for generating a reproduction signal based on light reflected by the optical disc, an A/D conversion section for converting an analog wobble signal included in the reproduction signal into a digital wobble signal, and a maximum likelihood decoding section for generating an address signal representing address information having maximum likelihood from the digital wobble signal based on a state transition rule defined by a modulation rule of the modulated address information.

According to still another aspect of the invention, an address reproduction method for reproducing address information based on a reproduction signal which is read from an optical disc including a guide groove having a wobbling shape which represents modulated address information is provided. The address reproduction method includes the steps of converting an analog wobble signal included in the reproduction signal into a digital wobble signal; and generating an address signal representing address information having maximum likelihood from the digital wobble signal based on a state transition rule defined by a modulation rule of the modulated address information.

In one embodiment of the invention, the modulated address information is MSK-modulated, and the state transition rule is defined by an MSK modulation rule.

In one embodiment of the invention, the state transition rule has four states, state S0, state S1, state S2 and state S3 defined by the MSK modulation rule. According to the state transition rule, when the address information represents 0 in state S0, the state of reproduction makes a transition from state S0 to state S0, and a digital wobble signal representing +1 is estimated. When the address information represents 1 in state S0, the state of reproduction makes a transition from state S0 to state S1, and a digital wobble signal representing +1 is estimated. When the address information represents 0 in state S1, the state of reproduction makes a transition from state S1 to state S2, and a digital wobble signal representing -1 is estimated. When the address information represents 0 in state S2, the state of reproduction makes a transition from state S2 to state S3, and a digital wobble signal representing -1 is estimated. When the address information represents 0 in state S3, the state of reproduction makes a transition from state S3 to state S0, and a digital wobble signal representing +1 is estimated.

In one embodiment of the invention, the state transition rule has four states, state S0, state S1, state S2 and state S3 defined by the MSK modulation rule. According to the state transition rule, when the address information represents 0 in state S0, the state of reproduction makes a transition from state S0 to state S0, and a digital wobble signal representing -1 is estimated. When the address information represents 1 in state S0, the state of reproduction makes a transition from state S0 to state S1, and a digital wobble signal representing 0 is estimated. When the address information represents 0 in state S1, the state of reproduction makes a transition from state S1 to state S2, and a digital wobble signal representing +1 is estimated. When the address information represents 0 in state S2, the state of reproduction makes a transition from state S2 to state S3, and a digital wobble signal representing 0 is estimated. When the address information represents 0 in state S3, the state of reproduction makes a transition from state S3 to state S0, and a digital wobble signal representing -1 is estimated.

In one embodiment of the invention, the modulated address information is phase-modulated, and the state transition rule is defined by a phase modulation rule.

In one embodiment of the invention, the state transition rule has five states, state S0, state S1, state S2, state S3 and state S4 defined by the phase modulation rule. According to the state transition rule, when the address information represents 0 in state S0, the state of reproduction makes a transition from state S0 to state S0, and a digital wobble signal representing +1 is estimated. When the address information represents 1 in state S0, the state of reproduction makes a transition from state S0 to state S1, and a digital wobble signal representing -1 is estimated. When the address information represents 0 in state S1, the state of reproduction makes a transition from state S1 to state S0, and a digital wobble signal representing +1 is estimated. When the address information represents 1 in state S1, the state of reproduction makes a transition from state S1 to state S2, and a digital wobble signal representing -1 is estimated. When the address information represents 0 in state S2, the state of reproduction makes a transition from state S2 to state S0, and a digital wobble signal representing +1 is estimated. When the address information represents 1 in state S2, the state of reproduction makes a transition from state S2 to state S3, and a digital wobble signal representing -1 is estimated. When the address information represents 1 in state S3, the state of reproduction makes a transition from state S3 to state S4, and a digital wobble signal representing -1 is estimated. When the address information represents 0 in state S4, the state of reproduction makes a transition from state S4 to state S0, and a digital wobble signal representing +1 is estimated.

An address reproduction circuit, an optical disc drive and an address reproduction method according to the present invention perform maximum likelihood decoding using a state transition rule which is defined by a modulation rule (for example, an MSK modulation rule or a phase modulation rule) of modulated address information which is represented by the wobbling shape of the guide groove. Thus, a highly reliable address signal can be output.

An address reproduction circuit, an optical disc drive and an address reproduction method according to the present invention control expected values used in a branch metric calculation. By controlling the expected values, the influence of the waveform distortion included in the wobble signal is reduced, and thus a highly reliable address signal can be output.

An address reproduction circuit, an optical disc drive and an address reproduction method according to the present invention determine whether or not an expected value should be returned to the initial value based on a synchronization status signal or an address read status signal. Even when correct maximum likelihood decoding is not performed, a highly reliable address signal can be output by returning the expected value to the initial value.

Thus, the invention described herein makes possible the advantages of providing an address reproduction circuit and method for reproducing address information from an optical disc including a guide groove having a wobbling shape which represents modulated address information using a maximum likelihood system, and an optical disc drive including the address reproduction circuit.

These and other advantages of the present invention will become apparent to those skilled in the art upon reading and understanding the following detailed description with reference to the accompanying figures.

BRIEF DESCRIPTION OF THE DRAWINGS

Figure **1A** shows a wobble signal obtained when the guide groove is wobbled at a monotone frequency;

Figure **1B** shows a wobble signal obtained when the wobbling pattern is phase-modulated;

Figure **1C** shows a guide groove having a wobbling shape representing phase-modulated address information;

Figure **2A** shows a wobble signal obtained when the guide groove is wobbled at a monotone frequency;

Figure **2B** shows a wobble signal obtained when the wobbling pattern is MSK-modulated;

Figure **2C** shows a guide groove having a wobbling shape representing MSK-modulated address information;

Figure **3A** shows a wobble signal obtained when the wobbling pattern is MSK-modulated;

Figure **3B** shows a carrier signal having a wobble frequency;

Figure **3C** shows an MSK modulation component as a multiplication output;

Figures **4A** through **4C** show a sampling operation for sampling a wobble signal obtained when the wobbling pattern is MSK-modulated;

Figure **5A** is a state transition diagram illustrating a state transition rule defined by an MSK modulation rule;

Figure **5B** is a trellis diagram corresponding to the state transition diagram shown in Figure **5A**;

Figure **5C** is a state transition diagram illustrating a state transition rule defined by an MSK modulation rule;

Figure **5D** is a trellis diagram corresponding to the state transition diagram shown in Figure **5C**;

Figure **6** shows a maximum likelihood decoding section according to an example of the present invention;

Figure **7A** shows a circuit in a survival path determination section according to an example of the present invention;

Figure **7B** shows the survival path determination section according to an example of the present invention;

Figure **8** shows sampling results of a wobble signal which is obtained when the wobbling shape of the guide groove represents MSK-modulated address information;

Figure **9** shows a maximum likelihood decoding section according to an example of the present invention;

Figure **10** shows expected values which are output by an expected value control section according to an example of the present invention;

Figures **11A** through **11D** show a sampling operation for sampling a wobble signal when the wobbling pattern is phase-modulated;

Figure **12A** shows a state transition diagram illustrating a state transition rule defined by a phase modulation rule;

Figure **12B** is a trellis diagram corresponding to the state transition diagram shown in Figure **12A**;

Figure **12C** is a state transition diagram illustrating a state transition rule defined by a phase modulation rule;

Figure **12D** is a trellis diagram corresponding to the state transition diagram shown in Figure **12C**;

Figure **13A** shows a circuit in a survival path determination section according to an example of the present invention;

Figure **13B** shows the survival path determination section according to an example of the present invention;

Figure **14** shows a maximum likelihood decoding section according to an example of the present invention;

Figure **15A** shows sampling results of a wobble signal obtained when the wobbling shape of the guide groove is phase-modulated;

Figure **15B** shows expected values which are output by an expected value control section according to an example of the present invention; and

Figure **16** shows an optical disc drive according to an example of the present invention.

DESCRIPTION OF THE PREFERRED EMBODIMENTS

According to the present invention, address information having maximum likelihood is reproduced from a reproduced wobble signal in accordance with the modulation rule of the address information. Hereinafter, the present invention will be described by way of illustrative examples with reference to the accompanying drawings.

(Example 1)

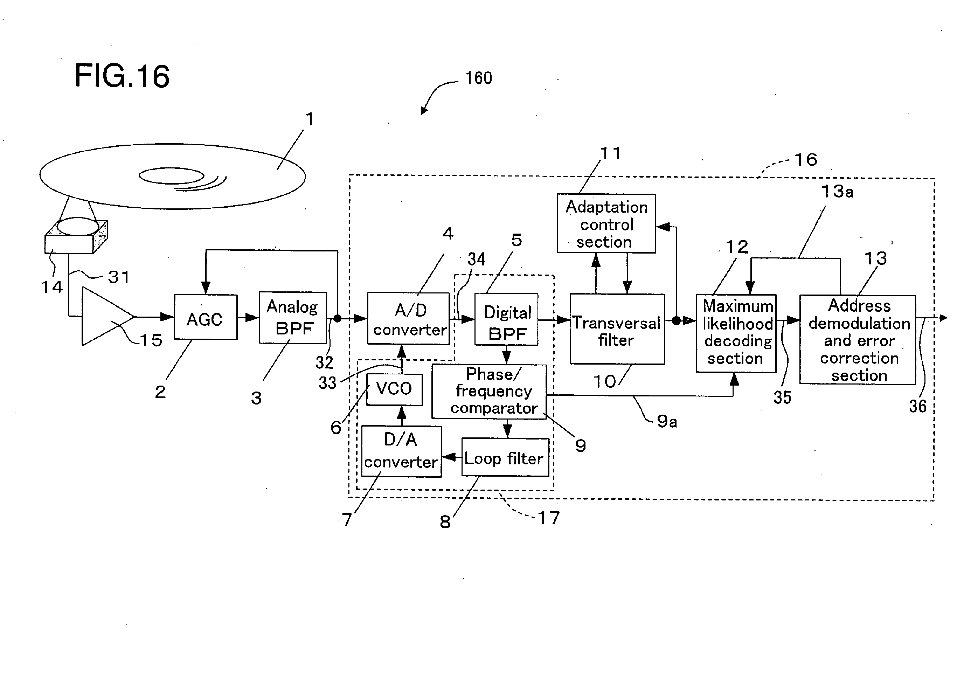

Figure **16** is a schematic view of an optical disc drive 160 according to a first example of the present invention. The optical disc drive **160** includes an AGC (Automatic Gain Control) circuit **2**, an analog BPF (Band Pass Filter) **3**, an optical head section **14**, a preamplifier **15**, and an address reproduction circuit **16.**

The address reproduction circuit **16** includes an A/D converter **4**, a PLL block **17,** a transversal filter **10**, an adaptation control section **11**, a maximum likelihood decoding section **12**, and an address demodulation and error correction section **13**. The PLL block **17** includes a digital BPF **5**, a VCO (Voltage-Controlled Oscillator) **6**, a D/A converter **7**, a loop filter **8**, and a phase/frequency comparator **9**. The address reproduction section **16** is produced as, for example, a semiconductor chip. An optical disc **1** includes a guide groove having a wobbling shape which represents modulated address information (for example, the guide groove **103** shown in Figure **1C** or the guide groove **203** shown in Figure **2C**).

Information recorded on the optical disc **1** is read by the optical head section **14** acting as a reading section. The optical head section **14** irradiates the optical disc **1** with laser light so as to generate a reproduction signal based on light reflected by the optical disc **1**. The optical head section **14** outputs a tracking error signal **31** as a part of the reproduction signal. The tracking error signal **31** includes an analog wobble signal **32** in accordance with the wobbling shape of the guide groove. The tracking error signal **31** is amplified by the preamplifier **15** and is input to the analog BPF **3** via the AGC circuit **2**. A necessary signal band component is extracted from the tracking error signal **31** by the analog BPF **3**, and the analog wobble signal **32** is input to the A/D converter **4** efficiently.

The A/D converter **4** converts the analog wobble signal **32** into a digital wobble signal **34**. The A/D converter **4** samples the analog wobble signal **32** in accordance with a timing signal **33** output from the VCO **6** and generates the digital wobble signal **34**. The digital BPF **5** extracts a necessary signal band component from the digital wobble signal **34.** The phase/frequency comparator **9** detects a phase error and a frequency error included in the analog wobble signal **32** based on the signal band component extracted by the digital BPF **5**. Based on the detected phase error and frequency error, the loop filter **8** generates a control signal for controlling the VCO **6**. The generated control signal is input to the VCO **6** via the D/A converter **7**, and the oscillating frequency of the VCO **6** is controlled. The digital wobble signal **34** is input to the transversal filter **10** via the digital BPF **5**. A coefficient of the transversal filter **10** is controlled by the adaptation control section **11** such that an equalization error is minimum. The maximum likelihood decoding section **12** generates an address signal **35** representing address information having maximum likelihood from the digital wobble signal **34** including the address signal in accordance with a state transition rule which is defined by a modulation rule of modulated address information (by which the address has been modulated). The address demodulation and error correction section **13** demodulates the address signal **35** into address data **36.** Using the address data **36**, an arbitrary position on the optical disc **1** can be accessed to read or write data.

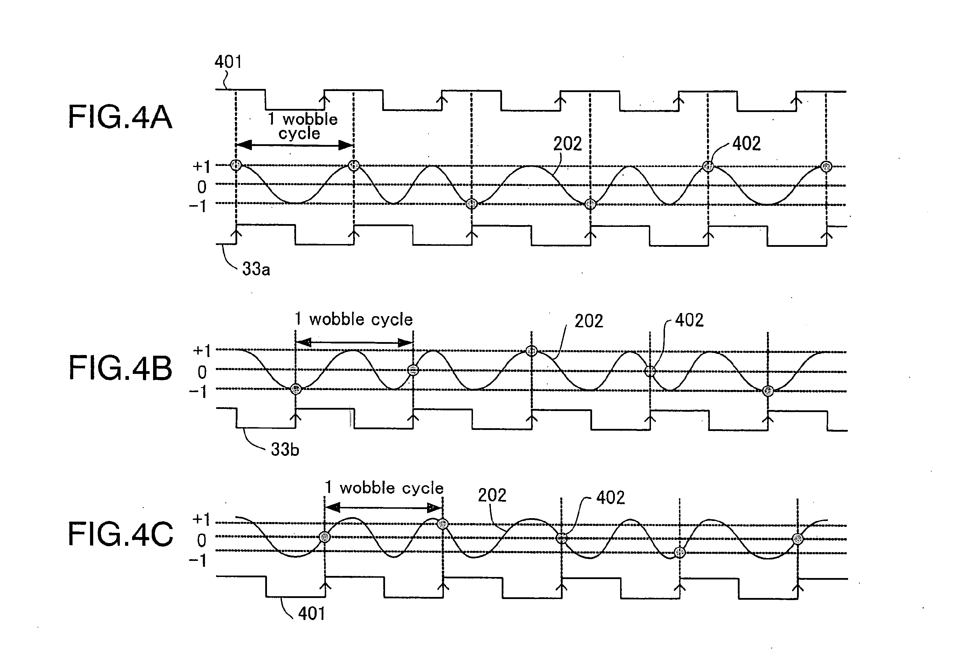

The first example of the present invention will be described in more detail. With reference to Figure **2C,** the wobbling shape of the guide groove **203** represents MSK-modulated address information. With reference to Figure **4A**, the wobble signal **202** is sampled using a timing signal **33a** which is delayed by $\pi/2$ phase with respect to a wobble clock signal **401** which is generated from the wobble clock signal **202**. In Figure **4A**, white circles represent sampling data **402** (i.e., the digital wobble signal **34**). The sampling data **402** constantly has a value of +1 in a monotone frequency portion which is not MSK-modulated. The sampling data **402** has a value of -1 in an MSK-modulated portion. Using such a regularity based on the MSK modulation, maximum likelihood determination can be performed.

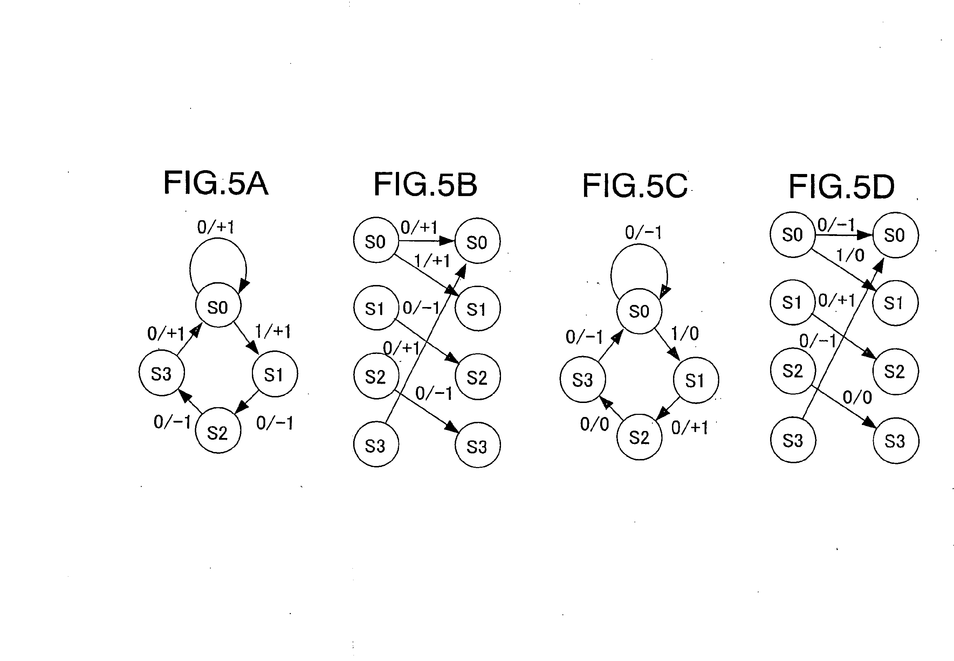

Figure **5A** is a state transition diagram illustrating a state transition rule having four states defined by the MSK modulation rule. The state transition rule shown in Figure **5A** represents the regularity of sampling results under the sampling conditions shown in Figure **4A.** This regularity is defined by the MSK modulation rule. Each state is represented by Si (Si = $S_i$; i is an integer of 0 through 3). Figure **5B** is a trellis diagram illustrating the state transition rule represented along a time axis.

The state transition rule shown in Figure 5A has four states S0, S1, S2 and S3 defined by the MSK modulation rule. According to this state transition rule, when the address information represents 0 in state S0, the state of reproduction makes a transition from state S0 to state S0, and a digital wobble signal representing +1 is estimated. When the address information represents 1 in state S0, the state of reproduction makes a transition from state S0 to state S1, and a digital wobble signal representing +1 is estimated. When the address information represents 0 in state S1, the state of reproduction makes a transition from state S1 to state S2, and a digital wobble signal representing -1 is estimated. When the address information represents 0 in state S2, the state of reproduction makes a transition from state S2 to state S3, and a digital wobble signal representing -1 is estimated. When the address information represents 0 in state S3, the state of reproduction makes a transition from state S3 to state S0, and a digital wobble signal representing +1 is estimated.

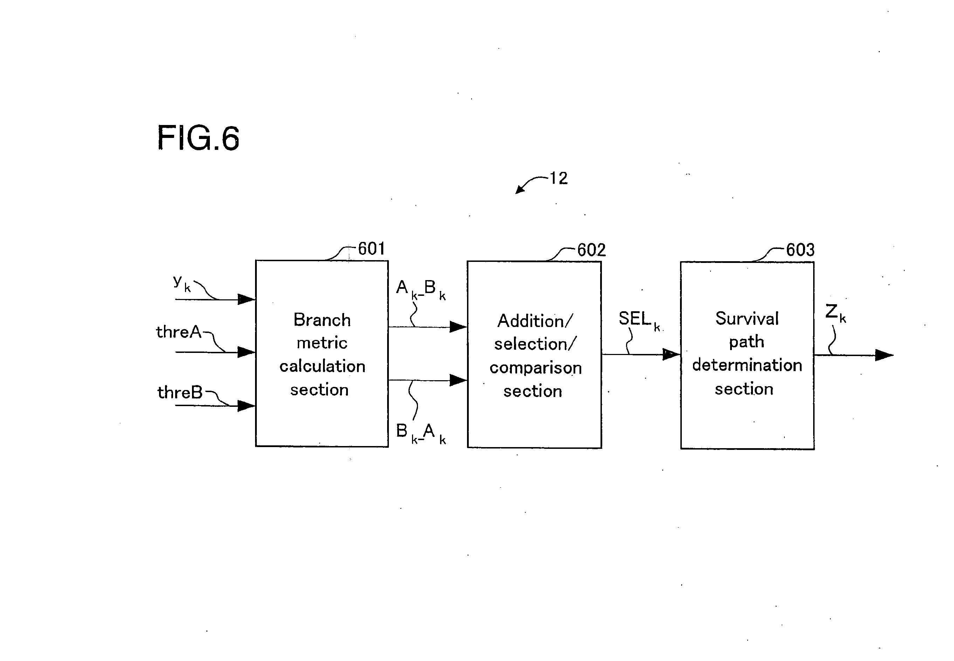

Figure **6** shows the maximum likelihood decoding section **12**. The maximum likelihood decoding section **12** includes a branch metric calculation section **601** for calculating a distance between a digital wobble signal **34** and an expected value of the maximum likelihood decoding section **12**, an addition/selection/comparison section **602** for accumulating the calculation results of the branch metric section **601** based on the state transition rule, and a survival path determination section 603 for generating an address signal representing address information having maximum likelihood based on the accumulation result of the addition/selection/comparison section **602** and the state transition rule.

The likelihood in each state at time k (k is an integer) is $Ls_{i,k}$. It is considered that state $S_0$ is generated by a state transition from state $S_0$ one time before or state $S_3$ one time before. The maximum likelihood decoding section 12 determines which state transition is more likely among two state transitions which can be assumed, based on state $S_0$ or state $S_3$ at time k-1 which is more likely and also based on the value of sampling data $y_k$ obtained at time k. This processing is represented by expression 1.

(Expression 1)

$$Ls_{0,k} = \min[Ls_{0,k-1} + (y_k-1)^2, Ls_{3,k-1} + (y_k-1)^2]$$

$$Ls_{1,k} = Ls_{0,k-1} + (y_k-1)^2$$

$$Ls_{2,k} = Ls_{1,k-1} + (y_k+1)^2$$

$$Ls_{3,k} = Ls_{2,k-1} + (y_k+1)^2$$

Here, "min[]" is an operator for selecting the minimum value. At each time, a likely state transition is selected in accordance with expression 1 using sampling data $y_k$. All the branch metric calculations are modified, and $y_k^2/4$ is subtracted from the result of multiplying expression 1 with 1/4. Then, expression 1 is changed to expression 2.

(Expression 2)

$$Ls_{0,k} = \min[Ls_{0,k-1} + A_k, Ls_{3,k-1} + A_k]$$

$$Ls_{1,k} = Ls_{0,k-1} + A_k$$

$$Ls_{2,k} = Ls_{1,k-1} + B_k$$

$$Ls_{3,k} = Ls_{2,k-1} + B_k$$

Here, $A_k = -y_k/2 + 1/4 = threA - y_k/2$

$$threA = 1/4$$

$$B_k = y_k/2+1/4 = y_k/2 - threB$$

$$threB = -1/4$$

In addition, a difference metric is defined. The difference metric is for obtaining a difference between likelihoods which can be assumed in a certain state. The difference between the likelihood in state $S_0$ and the likelihood in state $S_1$ at time k is defined as $\Delta01_k$. Similarly, the difference in likelihood in each of six states are defined as follows.

$$\Delta01_k = Ls_{0,k} - Ls_{1,k}$$

$$\Delta12_k = Ls_{1,k} - Ls_{2,k}$$

$$\Delta 23_k = Ls_{2,k} - Ls_{3,k}$$

$$\Delta 30_k = Ls_{3,k} - Ls_{0,k}$$

$$\Delta 20_k = Ls_{2,k} - Ls_{0,k}$$

$$\Delta 13_k = Ls_{1,k} - Ls_{3,k}$$

Expression 2 can be in two cases as represented by expression 3. Expression 3 represents addition/selection/comparison calculations.

(Expression 3)

(1) When $Ls_{0,k}$ is minimum ($LS_{3,K} - Ls_{0,K} \geq 0$)

$$\Delta 01_k = 0$$

$$\Delta 30_k = \Delta 20_{k-1} + y_k$$

$$\Delta 20_k = -\Delta 01_{k-1} + y_k$$

(2) When $Ls_{3,k}$ is minimum ($Ls_{3,k} - Ls_{0,k} < 0$)

$$\Delta 01_k = \Delta 30_{k-1}$$

$$\Delta 30_k = \Delta 23_{k-1} + y_k$$

$$\Delta 20_k = \Delta 13_{k-1} + y_k$$

The following calculations are performed regardless of whether the case is (1) or (2).

$$\Delta 12_k = \Delta 01_{k-1} - y_k$$

$$\Delta 23_k = \Delta 12_{k-1}$$

$$\Delta 13_k = -\Delta 20_{k-1} - y_k$$

The branch metric calculation section **601** performs the above branch metric calculations. The addition/selection/comparison section **602** performs the above addition/selection/comparison calculations.

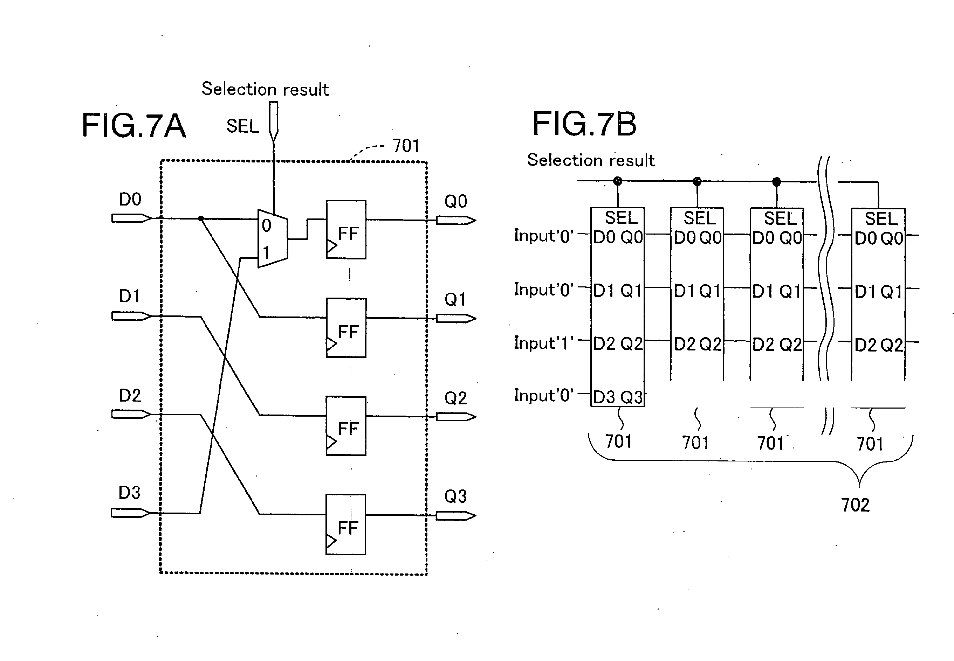

The survival path determination section 603 obtains a survival path in accordance with the state transition rule shown in Figure **5A** from the comparison result ($Ls_{3,k} - Ls_{0,k} < 0$). The survival path determination section **603** includes a plurality of circuits **701** shown in Figure **7A**. Specifically, as shown in Figure **7B**, the survival path determination section **603** includes a number of circuits **701** corresponding to a length **702** which is sufficient to perform maximum likelihood determination. When the survival path in accordance with the state transition rule is obtained, the four output sections output the same data "0" or "1".

In the first example, the timing signal **33a** which is delayed by n/2 phase with respect to the wobble clock signal **401** shown in Figure **4A** is used for sampling. The same effect is provided when a timing signal 33b which is delayed by 3n/2 phase with respect to the wobble clock signal **401** is used for sampling as shown in Figure **4B**, or when the wobble clock signal **401** is used for sampling as shown in Figure **4C**. When the timing signal **33b** which is delayed by $3\pi/2$ phase with respect to the wobble clock signal **401** is used for sampling, the state transition rule is as shown in Figure **5C**. The trellis diagram is as shown in Figure **5D**.

The state transition rule shown in Figure **5C** has four states S0, S1, S2 and S3 defined by the MSK modulation rule. According to this state transition rule, when the address information represents 0 in state S0, the state of reproduction makes a transition from state S0 to state S0, and a digital wobble signal representing -1 is estimated. When the address information represents 1 in state S0, the state of reproduction makes a transition from state S0 to state S1, and a digital wobble signal representing 0 is estimated. When the address information represents 0 in state S1, the state of reproduction makes a transition from state S1 to state S2, and a digital wobble signal representing +1 is estimated. When the address information represents 0 in state S2, the state of reproduction makes a transition from state S2 to state S3, and a digital wobble signal representing 0 is estimated. When the address information represents 0 in state S3, the state of reproduction makes a transition from state S3 to state S0, and a digital wobble signal representing -1 is estimated. The expressions 1 through 3 are changed in accordance with the state transition rule.

When the wobble clock signal **401** is used for sampling, the calculation expressions are also changed in accordance with the state transition rule.

(Example 2)

In the first example, the sampled value is ideally one of two values of +1 and -1 or one of three values of +1, 0 and -1.

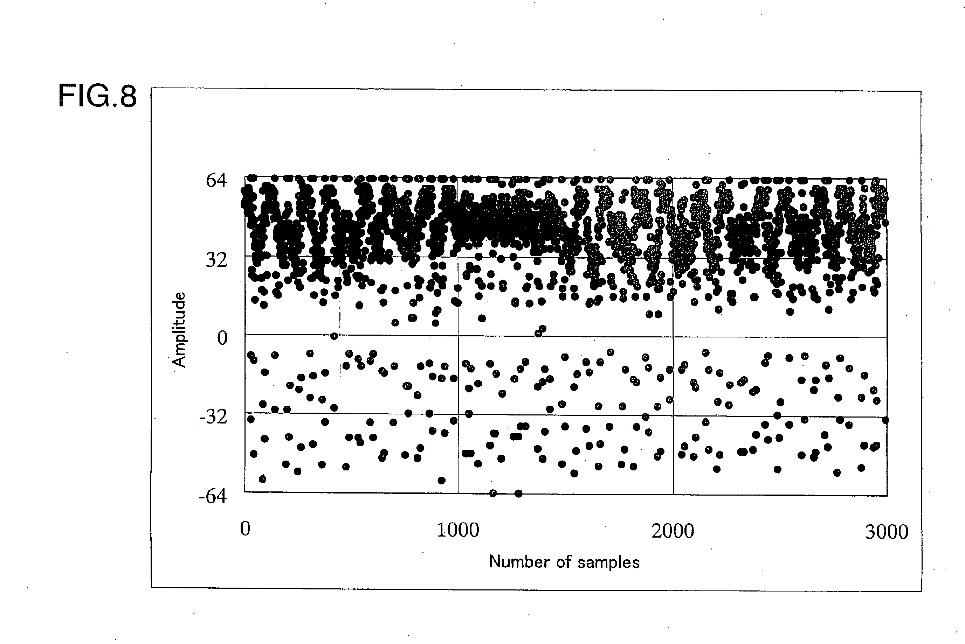

Figure **8** shows the results obtained by sampling the wobble signal **202** which is obtained when the wobbling shape of the guide groove **203** represents MSK-modulated address information using the timing signal **33a** (Figure **4A**). The signal representing the sampling result is a 7-bit signal. The sampling result is ideally a two-value signal, but in actuality includes a sampling variance based on a noise component and a variance caused by waveform distortion included in the wobble signal. In the above-mentioned maximum likelihood decoding section **12** (Figure **16**), it is assumed that the noise is predominant. Therefore, when the waveform distortion is predominant, highly reliable address information may not be obtained.

In a second example of the present invention, maximum likelihood decoding in accordance with the waveform distortion, which is performed on a wobble signal obtained when the wobbling shape represents MSK-modulated address information, will be described. In the second example, expected values of a maximum likelihood decoding section is controlled. The expected values are represented by $EXA_k$ through $EXE_k$. A constant waveform distortion component is detected, and the expected values are controlled.

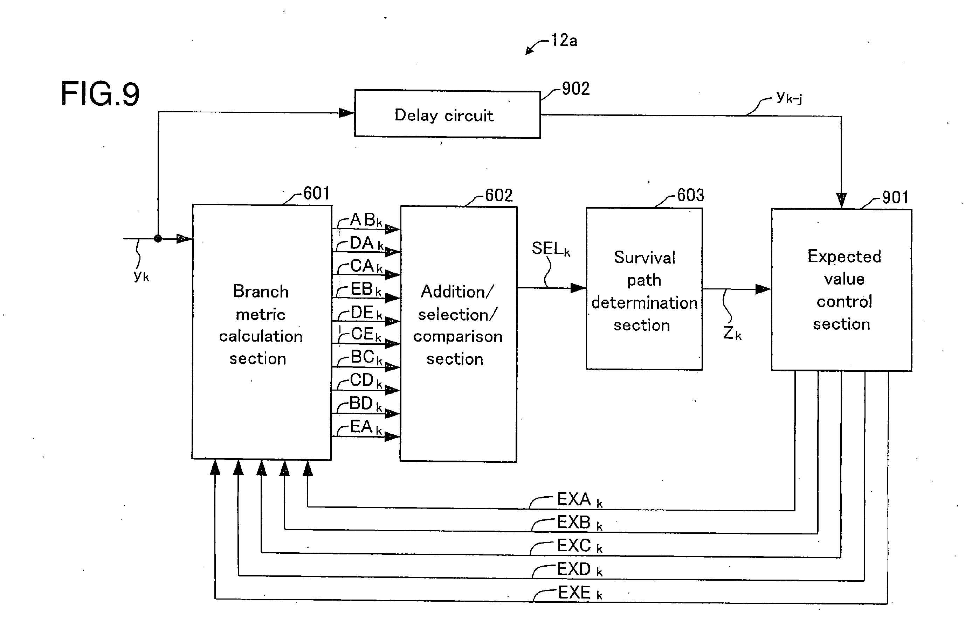

Figure **9** shows a maximum likelihood decoding section **12a**. The maximum likelihood decoding section **12a** may be provided in the address reproduction circuit **16** (Figure **16**) instead of the maximum likelihood decoding section **12**. The maximum likelihood decoding section **12a** includes an expected value control section **901** for controlling expected values based on a generated address signal and a digital wobble signal, and a delay circuit **902** in addition to the elements included in the maximum likelihood decoding section **12**.

Expression **1** is changed to obtain expression 4.

(Expression 4)

$$Ls_{0,k} = \min[Ls_{0,k-1} + (y_k\text{-}EXA_k)^2, Ls_{3,k-1} + (y_k\text{-}EXE_k)^2]$$

$$Ls_{1,k} = Ls_{0,k-1} + (y_k\text{-}EXB_k)^2$$

$$Ls_{2,k} = Ls_{1,k-1} + (y_k\text{-}EXC_k)^2$$

$$Ls_{3,k} = Ls_{2,k-1} + (y_k\text{-}EXD_k)^2$$

Expression 4 can be in two cases as represented by expression 5.

(Expression 5)

$$(1) \text{ When } Ls_{0,k} \text{ is minimum } (Ls_{3,k} - Ls_{0,k} \geq (y_k - EXA_k)^2$$

$$- (y_k - EXE_k)^2 = AE_k)$$

$$\Delta 01_k = AB_k$$

$$\Delta 30_k = \Delta 20_{k-1} + DA_k$$

$$\Delta 20_k = -\Delta 01_{k-1} + CA_k$$

(2) When $Ls_{3,k}$ is minimum $(Ls_{3,k} - Ls_{0,k} < (y_k - EXA_k)^2$

$$- (y_k - EXE_k)^2 = AE_k)$$

$$\Delta 01_k = \Delta 30_{k-1} + EB_k$$

$$\Delta 30_k = \Delta 23_{k-1} + DE_k$$

$$\Delta 20_k = \Delta 13_{k-1} + CE_k$$

The following calculations are performed regardless of whether the case is (1) or (2).

$$\Delta 12_k = \Delta 01_{k-1} + BC_k$$

$$\Delta 23_k = \Delta 12_{k-1} + CD_k$$

$$\Delta 13_k = -\Delta 20_{k-1} + BD_k$$

Here,

$$AB_k = (y_k - EXA_k)^2 - (y_k - EXB_k)^2$$

$$DA_k = (y_k - EXD_k)^2 - (y_k - EXA_k)^2$$

$$CA_k = (y_k - EXC_k)^2 - (y_k - EXA_k)^2$$

$$EB_k = (y_k - EXE_k)^2 - (y_k - EXB_k)^2$$

$$DE_k = (y_k - EXD_k)^2 - (y_k - EXE_k)^2$$

$$CE_k = (y_k - EXC_k)^2 - (y_k - EXE_k)^2$$

$$BC_k = (y_k - EXB_k)^2 - (y_k - EXC_k)^2$$

$$CD_k = (y_k - EXC_k)^2 - (y_k - EXD_k)^2$$

$$BD_k = (y_k - EXB_k)^2 - (y_k - EXD_k)^2$$

$$AE_k = (y_k - EXA_k)^2 - (y_k - EXE_k)^2$$

$AB_k$, $DA_k$, $CA_k$, $EB_k$, $DE_k$, $CE_k$, $BC_k$, $CD_k$, $BD_k$, and $AE_k$ are subtractions performed on two branch metrics. The calculations represented by expression 5 are executed by the addition/selection/comparison section **602.** Since the state transition rule is the same as that in the first example, the survival path determination path **603** obtains a survival path in accordance with the state transition rule shown in Figure **5A** in the same manner as in the first example. The delay circuit **902** delays sampling data $y_k$ by a prescribed time. The prescribed time is a total time required for processing performed by the branch metric calculation section **601**, the addition/selection/comparison section 602 and the survival path determination section 603. The expected value control section **901** controls expected values based on an address signal representing the address information having maximum likelihood which is generated by the survival path determination section **603** (i.e., maximum likelihood decoding result $Z_k$) and the delayed sampling data $y_{k-j}$ (j is a positive integer). The expected value control section **901** controls the expected values in accordance with expression 6.

(Expression 6)

When $(Z_k, Z_{k-1}, Z_{k-2}, Z_{k-3}) = (0,0,0,0)$,

$$EXA_k = 1/S * y_{k-j} + EXA_{k-1} * (S-1)/S$$

When $(Z_k, Z_{k-1}, Z_{k-2}, Z_{k-3}) = (1,0,0,0)$,

$$EXB_k = 1/S * y_{k-j} + EXB_{k-1} * (S-1)/S$$

When $(Z_k, Z_{k-1}, Z_{k-2}, Z_{k-3}) = (0,1,0,0)$,

$$EXC_k = 1/S * y_{k-j} + EXC_{k-1} * (S-1)/S$$

When $(Z_k, Z_{k-1}, Z_{k-2}, Z_{k-3}) = (0,0,1,0)$,

$$EXD_k = 1/S * y_{k-j} + EXD_{k-1} * (S-1)/S$$

When $(Z_k, Z_{k-1}, Z_{k-2}, Z_{k-3}) = (0,0,0,1)$,

$$EXE_k = 1/S * y_{k-j} + EXE_{k-1} * (S-1)/S$$

Here, S is a smoothing parameter, and $Z_k$ is a maximum likelihood decoding result.

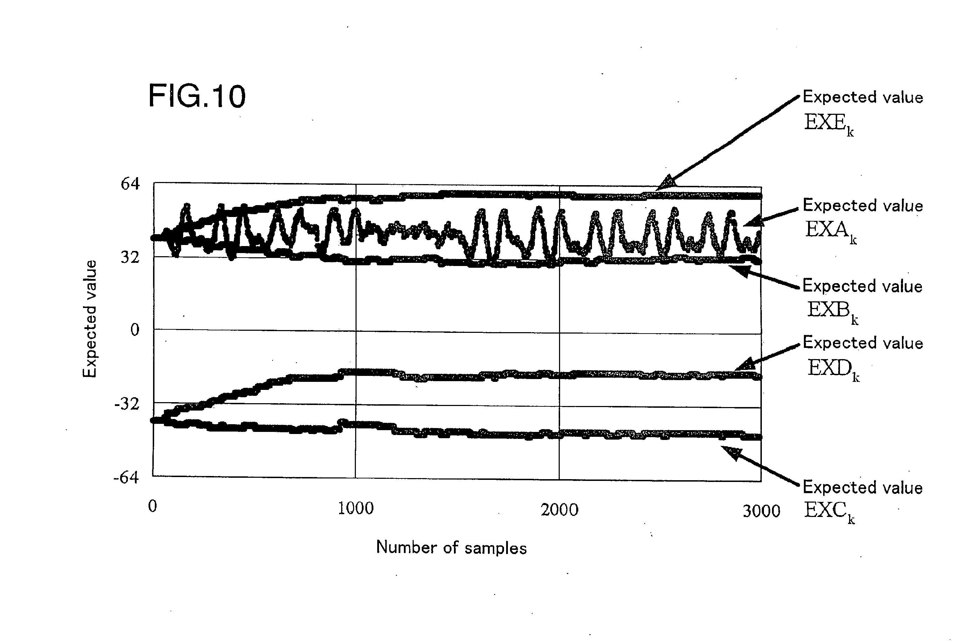

Figure **10** shows expected values $EXA_k$ through $EXE_k$ which are output from the expected value control section **901** when the sampling results shown in Figure **8** are input to the maximum likelihood decoding section **12a**. The expected values $EXA_k$ through $EXE_k$ shown in Figure **10** are used when performing maximum likelihood decoding on a wobble signal which is obtained when the wobbling shape represents MSK-modulated address information. Expected values $EXA_k$ through $EXE_k$ are each initially set at 40 or -40, but are updated to a different value from the initial value by the calculations represented by expression 6.

By calculating the expected values so as to be adapted to the detected constant waveform distortion, the reliability of the maximum likelihood can be further improved. The same effect is provided when a timing signal **33b** which is delayed by $3\pi/2$ phase with respect to the wobble clock signal **401** is used for sampling as shown in Figure **4B**, or when the wobble clock signal **401** is used for sampling as shown in Figure **4C**. The same effect is provided when the transversal filter **10** and the adaptation control section **11** shown in Figure **16** are provided before the maximum likelihood decoding section **12a** and adaptation control is performed so as to provide an ideal sampling result.

(Example 3)

In a third example of the present invention, maximum likelihood decoding performed on a wobble signal **102** which is obtained when the wobbling shape represents phase-modulated address information will be described.

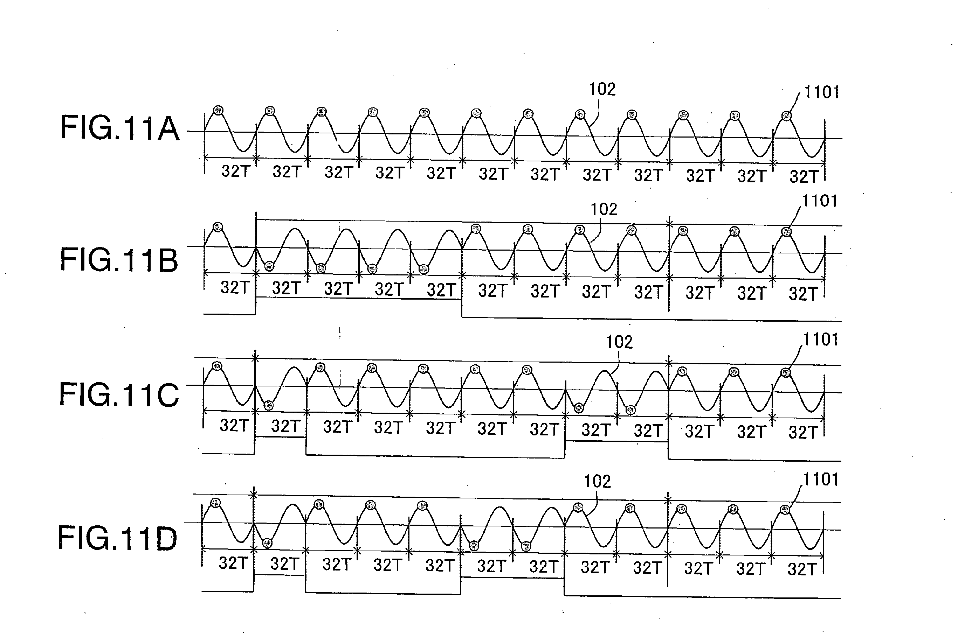

The wobble signal **102** shown in Figure **1B** is sampled using a prescribed wobble clock. Then, sampling results shown in Figures **11A** through **11D** are obtained. White circles represent sampling data **1101**. With reference to Figure **11A**, the sampling data **1101** constantly has a value of +1 in a monotone frequency portion which is not phase-modulated. The wobble pattern of the guide groove is phase-modulated so as to invert the phase every 93rd wobble cycle. When the phase is inverted, the sampling result represents -1. In a sync pattern as shown in Figure **11B**, the phase is inverted every 4th wobble cycle, and thus four continuous sampling results represent -1. In a zero pattern representing "0" as shown in Figure **11C**, the wobble is inverted for one wobble cycle, and after five wobble cycles, the wobble is again inverted for 2 wobble cycles. In a one pattern representing "1" as shown in Figure **11D**, the wobble is inverted for one wobble cycle, and after three wobble cycles, the wobble is again inverted for 2 wobble cycles. Using such a regularity of phase modulation, maximum likelihood decoding can be performed.

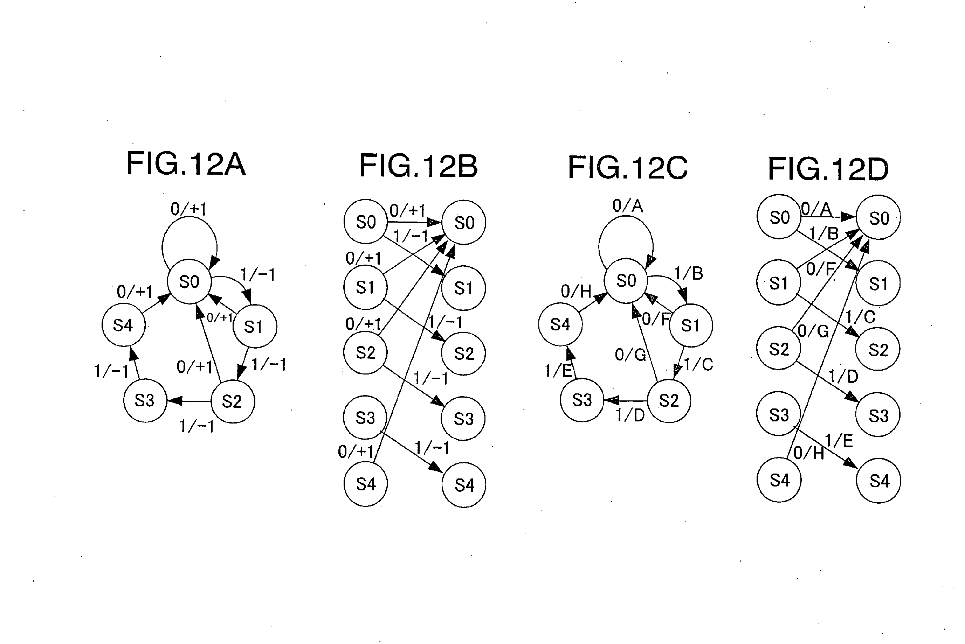

Figure **12A** is a state transition diagram illustrating a state transition rule having five states defined by phase modulation. The state transition rule shown in Figure **12A** represents the regularity of sampling results. This regularity is defined by the phase modulation rule. Each state is represented by Si (Si = $S_i$; i is an integer of 0 through 4). Figure **12B** is a trellis diagram illustrating the state transition rule represented along a time axis. The state transition rule shown in Figure **12A** has five states S0, S1, S2 , S3 and S4 which are defined by the phase modulation rule. In this state transition rule, when the address information represents 0 in state S0, the state of reproduction makes a transition from state S0 to state S0, and a digital wobble signal representing +1 is estimated. When the address information represents 1 in state S0, the state of reproduction makes a transition from state S0 to state S1, and a digital wobble signal representing -1 is estimated. When the address information represents 0 in state S1, the state of reproduction makes a transition from state S1 to state S0, and a digital wobble signal representing +1 is estimated. When the address information represents 1 in state S1, the state of reproduction makes a transition from state S1 to state S2, and a digital wobble signal representing -1 is estimated. When the address information represents 0 in state S2, the state of reproduction makes a transition from state S2 to state S0, and a digital wobble signal representing +1 is estimated. When the address information represents 1 in state S2, the state of reproduction makes a transition from state S2 to state S3, and a digital wobble signal representing -1 is estimated. When the address information represents 1 in state S3, the state of reproduction makes a transition from state S3 to state S4, and a digital wobble signal representing -1 is estimated. When the address information represents 0 in state S4, the state of reproduction makes a transition from state S4 to state S0, and a digital wobble signal representing +1 is estimated.

Where the likelihood in each state at time k (k is an integer) is $Ls_{i,k}$, expression 7 is obtained.

$$(\text{Expression 7})$$

$$Ls_{0,k} = \min[Ls_{0,k-1} + (y_k - 1)^2, Ls_{1,k-1} + (y_k - 1)^2, Ls_{2,k-1}$$

$$+ (y_k - 1)^2, Ls_{4,k-1} + (y_k - 1)^2]$$

$$Ls_{1,k} = Ls_{0,k-1} + (y_k + 1)^2$$

$$Ls_{2,k} = Ls_{1,k-1} + (y_k + 1)^2$$

$$Ls_{3,k} = Ls_{2,k-1} + (y_k + 1)^2$$

$$Ls_{4,k} = Ls_{3,k-1} + (y_k + 1)^2$$

Here, "min[ ]" is an operator for selecting the minimum value. At each time, a state transition having likelihood is selected in accordance with expression 7 using sampling data $y_k$. Expression 7 can be in four cases as represented by expression 8.

$$(\text{Expression 8})$$

$$(1) \text{ When } Ls_{0,k-1} \text{ is minimum,}$$

$$\Delta 01_k = -y_k$$

$$\Delta 40_k = \Delta 30_{k-1} + y_k$$

$$\Delta 02_k = \Delta 01_{k-1} - y_k$$

$$\Delta 30_k = \Delta 20_{k-1} + y_k$$

$$(2) \text{ When } Ls_{1,k-1} \text{ is minimum,}$$

$$\Delta 01_k = \Delta 10_{k-1} - y_k$$

$$\Delta 40_k = \Delta 31_{k-1} + y_k$$

$$\Delta 02_k = -y_k$$

$$\Delta 30_k = \Delta 21_{k-1} + y_k$$

(3) When $Ls_{2,k-1}$ is minimum,

$$\Delta 01_k = \Delta 20_{k-1} - y_k$$

$$\Delta 40_k = \Delta 32_{k-1} + y_k$$

$$\Delta 02_k = \Delta 21_{k-1} - y_k$$

$$\Delta 30_k = +y_k$$

(4) When $Ls_{4,k-1}$ is minimum,

$$\Delta 01_k = \Delta 40_{k-1} - y_k$$

$$\Delta 40_k = \Delta 34_{k-1} + y_k$$

$$\Delta 02_k = \Delta 41_{k-1} - y_k$$

$$\Delta 30_k = \Delta 24_{k-1} + y_k$$

The following calculations are performed regardless of whether the case is any of (1) through (4).

$$\Delta 12_k = \Delta 01_{k-1}$$

$$\Delta 23_k = \Delta 12_{k-1}$$

$$\Delta 34_k = \Delta 23_{k-1}$$

$$\Delta 24_k = \Delta 13_{k-1}$$

$$\Delta 41_k = \Delta 30_{k-1}$$

$$\Delta 13_k = \Delta 02_{k-1}$$

The survival path determination section **603** obtains a survival path in accordance with the state transition rule shown in Figure **12A** based on the result of the comparison calculation $\min[Ls_{0,k-1} + (y_k - 1)^2, Ls_{1,k-1} + (y_k - 1)^2, Ls_{2,k-1} + (y_k - 1)^2, Ls_{4,k-1} + (y_k - 1)^2]$. When the survival path in accordance with the state transition rule is obtained, the four output sections output the same data "0" or "1".

(Example 4)

In the third example, the sampled value is ideally one of two values of +1 and -1. The sampling result is ideally a two-value signal, but in actuality includes a sampling variance based on a noise component and a variance caused by waveform distortion included in the wobble signal.

In a fourth example of the present invention, expected values of a maximum likelihood decoding section is controlled as in the second example. The state transition rule is as shown in Figure **12C,** and the trellis diagram is as shown in Figure **12D**. The expected values are represented by $EXA_k$ through $EXH_k$. A constant waveform distortion component is detected, and the expected values are controlled.

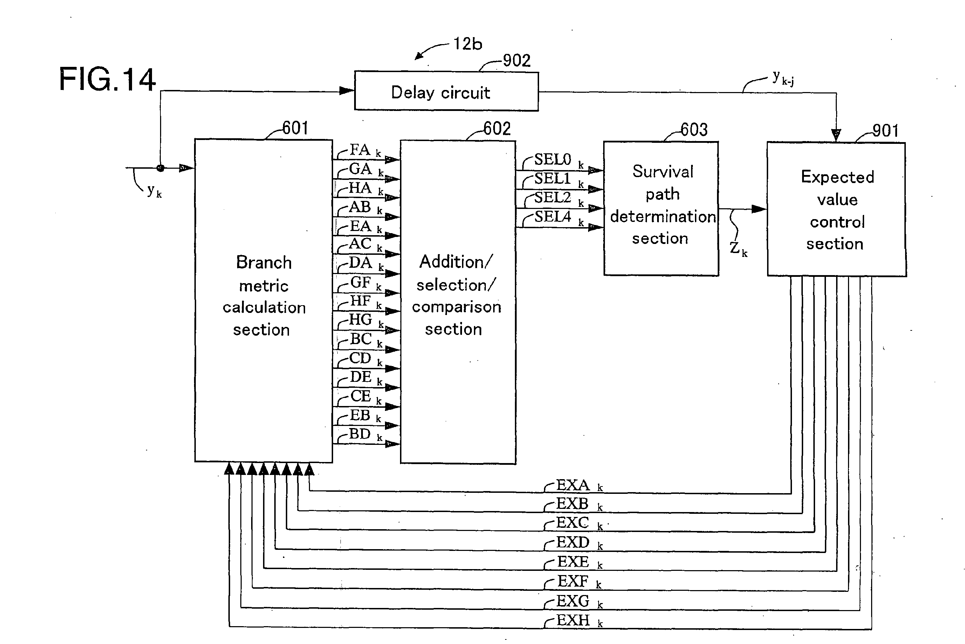

Figure **14** shows a maximum likelihood decoding section **12b.** The maximum likelihood decoding section **12b** may be provided in the address reproduction circuit **16** (Figure **16**) instead of the maximum likelihood decoding section **12.** The maximum likelihood decoding section **12b** includes an expected value control section **901** for controlling expected values based on a generated address signal and a digital wobble signal, and a delay circuit **902** in addition to the elements included in the maximum likelihood decoding section 12.

Expression 7 is changed to expression 9.

(Expression 9)

$$Ls_{0,k} = \min[Ls_{0,k-1} + (y_k - EXA_k)^2, Ls_{1,k-1} + (y_k - EXF_k)^2,$$

$$Ls_{2,k-1} + (y_k - EXG_k)^2, Ls_{4,k-1} + (y_k - EXH_k)^2]$$

$$Ls_{1,k} = Ls_{0,k-1} + (y_k - EXB_k)^2$$

$$Ls_{2,k} = Ls_{1,k-1} + (y_k - EXC_k)^2$$

$$Ls_{3,k} = Ls_{2,k-1} + (y_k - EXD_k)^2$$

$$Ls_{4,k} = Ls_{3,k-1} + (y_k - EXE_k)^2$$

Expression 9 can be in four cases as represented by expression 10.

(Expression 10)

(1) When $Ls_{0,k-1}$ is minimum ($\Delta 01_{k-1} \leq FA_k$, $\Delta 02_{k-1} \leq GA_k$,

$$\Delta 04_{k-1} \leq HA_k)$$

$$\Delta 01_k = AB_k$$

$$\Delta 40_k = \Delta 30_{k-1} + EA_k$$

$$\Delta 02_k = \Delta 01_{k-1} + AC_k$$

$$\Delta 30_k = \Delta 20_{k-1} + DA_k$$

(2) When $Ls_{1,k-1}$ is minimum ($\Delta 01_{k-1} > FA_k$, $\Delta 12_{k-1} \leq GF_k$,

$$\Delta 14_{k-1} \leq HF_k)$$

$$\Delta 01_k = \Delta 10_{k-1} + AB_k$$

$$\Delta 40_k = \Delta 31_{k-1} + EA_k$$

$$\Delta 02_k = AC_k$$

$$\Delta 30_k = \Delta 21_{k-1} + DA_k$$

(3) When $Ls_{2,k-1}$ is minimum ($\Delta 02_{k-1} > GA_k$, $\Delta 12_{k-1} > GF_k$,

$$\Delta 24_{k-1} \leq HG_k)$$

$$\Delta 01_k = \Delta 20_{k-1} + AB_k$$

$$\Delta 40_k = \Delta 32_{k-1} + EA_k$$

$$\Delta 02_k = \Delta 21_{k-1} + AC_k$$

$$\Delta 30_k = DA_k$$

(4) When $Ls_{4,k-1}$ is minimum ($\Delta 04_{k-1} > HA_k$, $\Delta 14_{k-1} > HF_k$,

$$\Delta 24_{k-1} > HG_k)$$

$$\Delta 01_k = \Delta 40_{k-1} + AB_k$$

$$\Delta 40_k = \Delta 34_{k-1} + EA_k$$

$$\Delta 02_k = \Delta 41_{k-1} + AC_k$$

$$\Delta 30_k = \Delta 24_{k-1} + DA_k$$

$$\Delta 12_k = \Delta 01_{k-1} + BC_k$$

The following calculations are performed regardless of whether the case is any of (1) through (4).

$$\Delta 23_k = \Delta 12_{k-1} + CD_k$$

$$\Delta 34_k = \Delta 23_{k-1} + DE_k$$

$$\Delta 24_k = \Delta 13_{k-1} + CE_k$$

$$\Delta 41_k = \Delta 30_{k-1} + EB_k$$

$$\Delta 13_k = \Delta 02_{k-1} + BD_k$$

Here, a selection signal $SEL_k$ which is output from the addition/selection/comparison section **602** to the survival path determination section **603** is defined. In Figure **6**, $SEL_k$ represents "1" when $Ls_{3,k} - Ls_{0,k} < 0$. In Figure **9**, $SEL_k$ represents "1" when $Ls_{3,k} - Ls_{0,k} + EA_k < 0$.

$$\text{When } \Delta 10_{k-1} + FA_k < 0, \ SEL10_k = "1"$$

$$\text{When } \Delta 20_{k-1} + GA_k < 0, \ SEL20_k = "1"$$

$$\text{When } \Delta 40_{k-1} + HA_k < 0, \ SEL40_k = "1"$$

$$\text{When } \Delta 21_{k-1} + GF_k < 0, \ SEL21_k = "1"$$

When $\Delta41_{k-1} + HF_k < 0$, $SEL41_k = "1"$

When $\Delta42_{k-1} + HG_k < 0$, $SEL42_k = "1"$

The selection signal is generated using the following logic formulas.

$$SEL0_k = SEL10_k = "0" \; \& \; SEL20_k = "0" \; \& \; SEL40_k = "0"$$

$$SEL1_k = SEL10_k = "1" \; \& \; SEL21_k = "0" \; \& \; SEL41_k = "0"$$

$$SEL2_k = SEL20_k = "1" \; \& \; SEL21_k = "1" \; \& \; SEL42_k = "0"$$

$$SEL4_k = SEL40_k = "1" \; \& \; SEL41_k = "1" \; \& \; SEL42_k = "1"$$

In addition, the following is defined.

$$FA_k = (y_k - EXF_k)^2 - (y_k - EXA_k)^2,$$

$$GA_k = (y_k - EXG_k)^2 - (y_k - EXA_k)^2,$$

$$HA_k = (y_k - EXH_k)^2 - (y_k - EXA_k)^2,$$

$$AB_k = (y_k - EXA_k)^2 - (y_k - EXB_k)^2,$$

$$EA_k = (y_k - EXE_k)^2 - (y_k - EXA_k)^2,$$

$$AC_k = (y_k - EXA_k)^2 - (y_k - EXC_k)^2,$$

$$DA_k = (y_k - EXD_k)^2 - (y_k - EXA_k)^2,$$

$$GF_k = (y_k - EXG_k)^2 - (y_k - EXF_k)^2,$$

$$HF_k = (y_k - EXH_k)^2 - (y_k - EXF_k)^2,$$

$$HG_k = (y_k - EXH_k)^2 - (y_k - EXG_k)^2,$$

$$BC_k = (y_k - EXB_k)^2 - (y_k - EXC_k)^2,$$

$$CD_k = (y_k - EXC_k)^2 - (y_k - EXD_k)^2,$$

$$DE_k = (y_k - EXD_k)^2 - (y_k - EXE_k)^2,$$

$$CE_k = (y_k - EXC_k)^2 - (y_k - EXE_k)^2,$$

$$EB_k = (y_k - EXE_k)^2 - (y_k - EXB_k)^2,$$

$$BD_k = (y_k - EXB_k)^2 - (y_k - EXD_k)^2$$

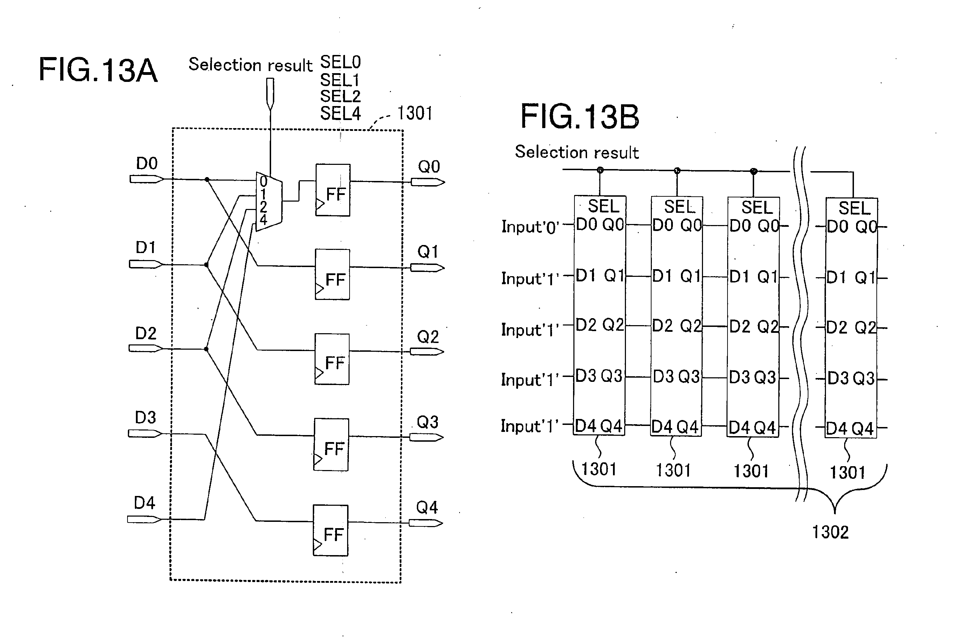

$FA_k$, $GA_k$, $HA_k$, $AB_k$, $EA_k$, $AC_k$, $DA_k$, $GF_k$, $HF_k$, $HG_k$, $BC_k$, $CD_k$, $DE_k$, $CE_k$, $EB_k$, and $BD_k$ are each a subtraction of two branch metrics. The calculations represented by expression 10 are executed by the addition/selection/comparison section **602**. The survival path determination section **603** obtains a survival path in accordance with the state transition rule shown in Figure **12C**. In this example, the survival 'path determination section **603** includes a plurality of circuits **1301** shown in Figure **13A**. Specifically, as shown in Figure **13B**, the survival path determination section **603** includes a number of circuits **1301** corresponding to a length **1302** which is sufficient to perform maximum likelihood determination.

The delay circuit **902** (Figure **14**) delays sampling data $y_k$ by a prescribed time. The prescribed time is a total time required for processing performed by the branch metric calculation section **601,** the addition/selection/comparison section **602** and the survival path determination section **603**. The expected value control section **901** controls expected values based on an address signal representing the address information having maximum likelihood which is generated by the survival path determination section **603** (i.e., maximum likelihood decoding result $Z_k$) and the delayed sampling data $y_{k-j}$ (j is a positive integer). The expected value control section **901** controls the expected values in accordance with expression 11.

<div align="center">

(Expression 11)

When $(Z_k, Z_{k-1}, Z_{k-2}, Z_{k-3}) = (0,0,x,x)$,

$$EXA_k = 1/S*y_{k-j} + A_{k-1}*(S-1)/S$$

When $(Z_k, Z_{k-1}, Z_{k-2}, Z_{k-3}) = (1,0,x,x)$,

$$EXB_k = 1/S*y_{k-j} + B_{k-1}*(S-1)/S$$

When $(Z_k, Z_{k-1}, Z_{k-2}, Z_{k-3}) = (1,1,0,x)$,

$$EXC_k = 1/S*y_{k-j} + C_{k-1}*(S-1)/S$$

When $(Z_k, Z_{k-1}, Z_{k-2}, Z_{k-3}) = (1,1,1,0)$,

$$EXD_k = 1/S*y_{k-j} + D_{k-1}*(S-1)/S$$

When $(Z_k, Z_{k-1}, Z_{k-2}, Z_{k-3}) = (1,1,1,1)$,

$$EXE_k = 1/S*y_{k-j} + E_{k-1}*(S-1)/S$$

When $(Z_k, Z_{k-1}, Z_{k-2}, Z_{k-3}) = (0,1,0,x)$,

$$EXF_k = 1/S*y_{k-j} + F_{k-1}*(S-1)/S$$

When $(Z_k, Z_{k-1}, Z_{k-2}, Z_{k-3}) = (0,1,1,0)$,

$$EXG_k = 1/S*y_{k-j} + G_{k-1}*(S-1)/S$$

</div>

$$\text{When } (Z_k, Z_{k-1}, Z_{k-2}, Z_{k-3}) = (0,1,1,1),$$

$$EXH_k = 1/S*y_{k-j} + H_{k-1}*(S-1)/S$$

Here, S is a smoothing parameter, and $Z_k$ is a maximum likelihood decoding result.

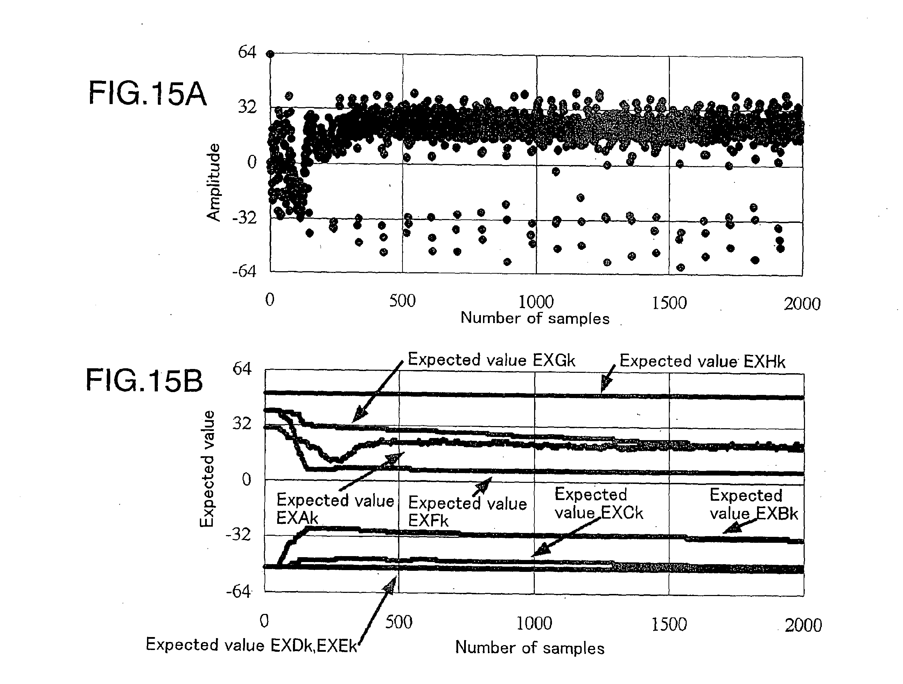

Figure 15A shows results obtainedby sampling awobble signal 102 which is obtained when the wobbling shape of the guide groove **103** represents phase-modulated address information. When the sampling result shown in Figure **15A** is input to the maximum likelihood decoder **12b** (Figure **14**), expected values $EXA_k$ through $EXH_k$ which are output from the expected value control section **901** are as shown in Figure **15B**. The expected values $EXA_k$ through $EXE_k$ are used when performing maximum likelihood decoding on a wobble signal which is obtained when the wobbling shape represents phase-modulated address information. Expected values $EXA_k$ through $EXE_k$ are initially set as follows. $EXA_k = 30$, $EXB_k$ through $EXE_k = -40$, $EXF_k = 40$, $EXG_k = 40$, and $EXH_k = 50$. The expected values $EXA_k$ through $EXE_k$ are each updated to a different value from the initial value by the calculations represented by expression 11.

By calculating the expected values so as to be adapted to the detected constant waveformdistortion, the reliability of the maximum likelihood can be further improved.

In the above examples, maximum likelihood decoding processing which is performed when the address information is MSK-modulated or phase-modulated is described in detail. Such maximum likelihood decoding processing is based on the premise that a clock is accurately extracted from a wobble signal and the analog wobble signal **32** and the timing signal **33** are in synchronization with each other by the operation of the PLL block **17**.

Hereinafter, decoding processing which is performed before the analog wobble signal **32** and the timing signal **33** become synchronized with each other or when the analog wobble signal **32** and the timing signal **33** get out of synchronization with each other will be described.

The PLL block **17** detects a frequency error and a phase error between the analog wobble signal **32** and the timing signal **33,** and performs feedback control such that the frequency error and the phase error are minimum. The PLL block **17** allows the analog wobble signal **32** to follow the timing signal **33** and synchronize the analog wobble signal **32** and the timing signal **33** with each other. The phase/frequency comparator **9** outputs a PLL synchronization status signal **9a** which indicates the synchronization status of the analog wobble signal **32** and the timing signal **33** (i. e., whether the analog wobble signal **32** and the timing signal **33** are in synchronization with each other) to the maximum likelihood decoding section **12a** shown in Figure **9** (or the maximum likelihood decoding section **12b** shown in Figure **14**). (In this case, the maximum likelihood decoding section **12a** or **12b** is provided in the address reproduction circuit **16** instead of the maximum likelihood decoding section **12**). The expected value control section **901** determines whether or not the expected values should be returned to the initial values based on the PLL synchronization status signal **9a**. When the analog wobble signal **32** and the timing signal **33** are not in synchronization with each other, the expected value control section **901** does not perform expected value learning and outputs the initial value. With reference to, for example, the sampling results in Figure **15A,** it is seen that the analog wobble signal **32** and the timing signal **33** are not in synchronization with each other for the first several hundred samples. In this case, correct maximum likelihood decoding result is not obtained, and expected values are controlled using an incorrect result. In order to avoid this, expected value leaning is performed only when the analog wobble signal **32** and the timing signal **33** are in synchronization with each other. Thus, address information is rapidly reproduced and thus the performance of the optical disc drive **160** is enhanced.

The address demodulation and error correction section **13** shown in Figure **16** demodulates physical address data **36** from an address signal (i.e. , the maximum likelihood decoding result) **35**. The address demodulation and error correction section **13** outputs an address read status signal **13a** representing an address read status (i.e., whether address read is performed or not) to the maximum likelihood decoding section **12a** (or the maximum likelihood decoding section **12b**) based on the address demodulation results (continuity of the address data **36**). The expected value control section **901** determines whether or not the expected values should be returned to the initial values based on the address read signal **13a**. When, for example, the maximum likelihood decoding section **12** performs incorrect expected value control due to a defect on the optical disc, the maximum likelihood decoding result can possibly be incorrect. In this case, the address read status signal **13a** indicates that address read is impossible. The expected value control section **901** sets the expected values to the initial values based on the address read status signal **13a**. In this manner, the expected value control section **901** can return to perform a normal operation rapidly after the optical head section **14** accesses the defect area of the optical disc. Thus, the performance of the optical disc drive **160** can be enhanced.

An address reproduction circuit, an optical disc drive and an address reproduction method according to the present invention perform maximum likelihood decoding using a state transition rule which is defined by a modulation rule (for example, an MSK modulation rule or a phase modulation rule) of modulated address information which is represented by the wobbling shape of the guide groove. Thus, a highly reliable address signal can be output.

An address reproduction circuit, an optical disc drive and an address reproduction method according to the present invention control expected values used in a branch metric calculation. By controlling the expected values, the influence of the waveform distortion included in the wobble signal is reduced, and thus a highly reliable address signal can be output.

An address reproduction circuit, an optical disc drive and an address reproduction method according to the present invention determine whether or not an expected value should be returned to the initial value based on a synchronization status signal or an address read status signal. Even when correct maximum likelihood decoding is not performed, a highly reliable address signal can be output by returning the expected value to the initial value.

Thus, the present invention provides an address reproduction circuit, an optical disc drive and an address reproduction method which are useful for reproducing address information from an optical disc including a guide groove having a wobbling shape which represents modulated address information.

Various other modifications will be apparent to and can be readily made by those skilled in the art without departing from the scope and spirit of this invention. Accordingly, it is not intended that the scope of the claims appended hereto be limited to the description as set forth herein, but rather that the claims be broadly construed.

**Claims**

1. An address reproduction circuit for reproducing address information based on a reproduction signal which is read from an optical disc including a guide groove having a wobbling shape which represents modulated address information, the address reproduction circuit comprising:

   an A/D conversion section for converting an analog wobble signal included in the reproduction signal into a digital wobble signal; and
   a maximum likelihood decoding section for generating an address signal representing address information having maximum likelihood from the digital wobble signal based on a state transition rule defined by a modulation rule of the modulated address information.

2. An address reproduction circuit according to claim 1, wherein:

   the modulated address information is MSK-modulated, and
   the state transition rule is defined by an MSK modulation rule.

3. An address reproduction circuit according to claim 2, wherein:

   the state transition rule has four states, state S0, state S1, state S2 and state S3 defined by the MSK modulation rule, and
   according to the state transition rule,
   when the address information represents 0 in state S0, the state of reproduction makes a transition from state S0 to state S0, and a digital wobble signal representing +1 is estimated,
   when the address information represents 1 in state S0, the state of reproduction makes a transition from state S0 to state S1, and a digital wobble signal representing +1 is estimated,
   when the address information represents 0 in state S1, the state of reproduction makes a transition from state S1 to state S2, and a digital wobble signal representing -1 is estimated,
   when the address information represents 0 in state S2, the state of reproduction makes a transition from state S2 to state S3, and a digital wobble signal representing -1 is estimated, and
   when the address information represents 0 in state S3, the state of reproduction makes a transition from state S3 to state S0, and a digital wobble signal representing +1 is estimated.

4. An address reproduction circuit according to claim 2, wherein:

   the state transition rule has four states, state S0, state S1, state S2 and state S3 defined by the MSK modulation rule, and
   according to the state transition rule,
   when the address information represents 0 in state S0, the state of reproduction makes a transition from state S0 to state S0, and a digital wobble signal representing -1 is estimated,
   when the address information represents 1 in state S0, the state of reproduction makes a transition from state S0 to state S1, and a digital wobble signal representing 0 is estimated,
   when the address information represents 0 in state S1, the state of reproduction makes a transition from state S1 to state S2, and a digital wobble signal representing +1 is estimated, when the address information represents 0 in state S2, the state of reproduction makes a transition from state S2 to state S3, and a digital wobble signal representing 0 is estimated, and when the address information represents 0 in state S3, the state of reproduction makes a transition from state S3 to state S0, and a digital wobble signal representing -1 is estimated.

**5.** An address reproduction circuit according to claim 1, wherein:

the modulated address information is phase-modulated, and
the state transition rule is defined by a phase modulation rule.

**6.** An address reproduction circuit according to claim 5, wherein:

the state transition rule has five states, state S0, state S1, state S2, state S3 and state S4 defined by the phase modulation rule, and
according to the state transition rule,
when the address information represents 0 in state S0, the state of reproduction makes a transition from state S0 to state S0, and a digital wobble signal representing +1 is estimated,
when the address information represents 1 in state S0, the state of reproduction makes a transition from state S0 to state S1, and a digital wobble signal representing -1 is estimated,
when the address information represents 0 in state S1, the state of reproduction makes a transition from state S1 to state S0, and a digital wobble signal representing +1 is estimated,
when the address information represents 1 in state S1, the state of reproduction makes a transition from state S1 to state S2, and a digital wobble signal representing -1 is estimated,
when the address information represents 0 in state S2, the state of reproduction makes a transition from state S2 to state S0, and a digital wobble signal representing +1 is estimated,
when the address information represents 1 in state S2, the state of reproduction makes a transition from state S2 to state S3, and a digital wobble signal representing -1 is estimated,
when the address information represents 1 in state S3, the state of reproduction makes a transition from state S3 to state S4, and a digital wobble signal representing -1 is estimated, and
when the address information represents 0 in state S4, the state of reproduction makes a transition from state S4 to state S0, and a digital wobble signal representing +1 is estimated.

**7.** An address reproduction circuit according to claim 1, wherein the maximum likelihood decoding section includes:

a branch metric calculation section for calculating a distance between the digital wobble signal and an expected value of the maximum likelihood decoding section,
an addition/selection/comparison section for accumulating calculation results of the branch metric calculation section based on the state transition rule, and
a survival path determination section for generating an address signal representing address information having maximum likelihood based on the accumulation result of the addition/selection/comparison section and the state transition rule.

**8.** An address reproduction circuit according to claim 1, wherein the maximum likelihood decoding section includes:

a branch metric calculation section for calculating a distance between the digital wobble signal and an expected value of the maximum likelihood decoding section,
an addition/selection/comparison section for accumulating calculation results of the branch metric calculation section based on the state transition rule,
a survival path determination section for generating an address signal representing address information having maximum likelihood based on the accumulation result of the addition/selection/comparison section and the state transition rule, and
an expected value control section for controlling the expected value based on the generated address signal and the digital wobble signal.

**9.** An address reproduction circuit according to claim 8, further comprising a demodulation section for demodulating the generated address signal, wherein:

the demodulation section outputs an address read status signal representing an address read status, and the expected value control section determines whether or not the expected value is to be returned to an initial value based on the address read status signal.

10. An address reproduction circuit according to claim 8, further comprising a PLL for synchronizing the analog wobble signal and a timing signal to be input to the A/D conversion section with each other, wherein:

the PLL outputs a synchronization status signal representing a synchronization status of the analog wobble signal and the timing signal, and

the expected value control section determines whether or not the expected value is to be returned to an initial value based on the synchronization status signal.

11. An optical disc drive for reproducing address information from an optical disc including a guide groove having a wobbling shape which represents modulated address information, the optical disc drive comprising:

a read section for generating a reproduction signal based on light reflected by the optical disc,

an A/D conversion section for converting an analog wobble signal included in the reproduction signal into a digital wobble signal; and

a maximum likelihood decoding section for generating an address signal representing address information having maximum likelihood from the digital wobble signal based on a state transition rule defined by a modulation rule of the modulated address information.

12. An address reproduction method for reproducing address information based on a reproduction signal which is read from an optical disc including a guide groove having a wobbling shape which represents modulated address information, the address reproduction method comprising the steps of:

converting an analog wobble signal included in the reproduction signal into a digital wobble signal; and

generating an address signal representing address information havingmaximum likelihood from the digital wobble signal based on a state transition rule defined by a modulation rule of the modulated address information.

13. An address reproduction method according to claim 12, wherein:

the modulated address information is MSK-modulated, and

the state transition rule is defined by an MSK modulation rule.

14. An address reproduction method according to claim 13, wherein:

the state transition rule has four states, state S0, state S1, state S2 and state S3 defined by the MSK modulation rule, and

according to the state transition rule,

when the address information represents 0 in state S0, the state of reproduction makes a transition from state S0 to state S0, and a digital wobble signal representing +1 is estimated,

when the address information represents 1 in state S0, the state of reproduction makes a transition from state S0 to state S1, and a digital wobble signal representing +1 is estimated,

when the address information represents 0 in state S1, the state of reproduction makes a transition from state S1 to state S2, and a digital wobble signal representing -1 is estimated,

when the address information represents 0 in state S2, the state of reproduction makes a transition from state S2 to state S3, and a digital wobble signal representing -1 is estimated, and

when the address information represents 0 in state S3, the state of reproduction makes a transition from state S3 to state S0, and a digital wobble signal representing +1 is estimated.

15. An address reproduction method according to claim 13, wherein:

the state transition rule has four states, state S0, state S1, state S2 and state S3 defined by the MSK modulation rule, and

according to the state transition rule,

when the address information represents 0 in state S0, the state of reproduction makes a transition from state S0 to state S0, and a digital wobble signal representing -1 is estimated,
when the address information represents 1 in state S0, the state of reproduction makes a transition from state S0 to state S1, and a digital wobble signal representing 0 is estimated,
when the address information represents 0 in state S1, the state of reproduction makes a transition from state S1 to state S2, and a digital wobble signal representing +1 is estimated,
when the address information represents 0 in state S2, the state of reproduction makes a transition from state S2 to state S3, and a digital wobble signal representing 0 is estimated, and
when the address information represents 0 in state S3, the state of reproduction makes a transition from state S3 to state S0, and a digital wobble signal representing -1 is estimated.

16. An address reproduction method according to claim 12, wherein:

the modulated address information is phase-modulated, and
the state transition rule is defined by a phase modulation rule.

17. An address reproduction method according to claim 16, wherein:

the state transition rule has five states, state S0, state S1, state S2, state S3 and state S4 defined by the phase modulation rule, and
according to the state transition rule,
when the address information represents 0 in state S0, the state of reproduction makes a transition from state S0 to state S0, and a digital wobble signal representing +1 is estimated,
when the address information represents 1 in state S0, the state of reproduction makes a transition from state S0 to state S1, and a digital wobble signal representing -1 is estimated,
when the address information represents 0 in state S1, the state of reproduction makes a transition from state S1 to state S0, and a digital wobble signal representing +1 is estimated,
when the address information represents 1 in state S1, the state of reproduction makes a transition from state S1 to state S2, and a digital wobble signal representing -1 is estimated,
when the address information represents 0 in state S2, the state of reproduction makes a transition from state S2 to state S0, and a digital wobble signal representing +1 is estimated,
when the address information represents 1 in state S2, the state of reproduction makes a transition from state S2 to state S3, and a digital wobble signal representing -1 is estimated,
when the address information represents 1 in state S3, the state of reproduction makes a transition from state S3 to state S4, and a digital wobble signal representing -1 is estimated, and
when the address information represents 0 in state S4, the state of reproduction makes a transition from state S4 to state S0, and a digital wobble signal representing +1 is estimated.

FIG.1A

101

32T 32T 32T 32T 32T 32T 32T 32T 32T 32T 32T

FIG.1B

ADIP sync unit

102

4NW

32T 32T 32T 32T 32T 32T 32T 32T 32T 32T 32T

FIG.1C

ADIP sync unit

103

32T 32T 32T 32T 32T 32T 32T 32T 32T 32T 32T

FIG.2A

201

69T | 69T | 69T | 69T | 69T | 69T

414T

FIG.2B

202

f ( = 1/69T)   1.5f   f   1.5f   f

69T   69T

FIG.2C

203

f ( = 1/69T)   1.5f   f   1.5f   f

69T   69T

EP 1 431 975 A2

EP 1 431 975 A2

FIG.3A

FIG.3B

FIG.3C

FIG.4A

FIG.4B

FIG.4C

EP 1 431 975 A2

EP 1 431 975 A2

# FIG.5A

0/+1

S0

0/+1   1/+1

S3   S1

0/-1   0/-1

S2

# FIG.5B

S0   0/+1   S0

1/+1

S1   0/-1   S1

0/+1

S2   S2

0/-1

S3   S3

# FIG.5C

0/-1

S0

0/-1   1/0

S3   S1

0/0   0/+1

S2

# FIG.5D

S0   0/-1   S0

1/0

S1   0/+1   S1

0/-1

S2   S2

0/0

S3   S3

# FIG.6

EP 1 431 975 A2

# FIG.7A

Selection result

SEL

D0 → Q0
D1 → Q1
D2 → Q2
D3 → Q3

701

FF → Q0
FF → Q1
FF → Q2
FF → Q3

# FIG.7B

Selection result

SEL
D0 Q0
D1 Q1
D2 Q2

701

SEL
D0 Q0
D1 Q1
D2 Q2

701

SEL
D0 Q0
D1 Q1
D2 Q2

701

SEL
Input'0' — D0 Q0
Input'0' — D1 Q1
Input'1' — D2 Q2
Input'0' — D3 Q3

701

702

FIG.8

EP 1 431 975 A2

EP 1 431 975 A2

**FIG.9**

−12a

FIG.10

FIG.11A

FIG.11B

FIG.11C

FIG.11D

EP 1 431 975 A2

# FIG.12A

# FIG.12B

# FIG.12C

# FIG.12D

EP 1 431 975 A2

FIG.13B

FIG.13A

FIG.14

12b — 902 Delay circuit

$y_{k-j}$

601 Branch metric calculation section

602 Addition/ selection/ comparison section

603 Survival path determination section

$Z_k$

901 Expected value control section

$y_k$

FA$_k$, GA$_k$, HA$_k$, AB$_k$, EA$_k$, AC$_k$, DA$_k$, GF$_k$, HF$_k$, HG$_k$, BC$_k$, CD$_k$, DE$_k$, CE$_k$, EB$_k$, BD$_k$

SEL0$_k$, SEL1$_k$, SEL2$_k$, SEL4$_k$

EXA$_k$, EXB$_k$, EXC$_k$, EXD$_k$, EXE$_k$, EXF$_k$, EXG$_k$, EXH$_k$

FIG.15A

FIG.15B

FIG.16